# FASCICULE DE BREVET EUROPEEN

(11) **EP 0 545 776 B1**
(45) Date de publication et mention de la délivrance du brevet: **22.07.1998**
(21) Numéro de dépôt: 92403168.5
(22) Date de dépôt: 25.11.1992
(51) Int. Cl.: C08K 7/02, C08K 13/04

(54) **Matière à mouler contenant des fibres réfractaires, utilisable dans la fabrication de pièces ablatables, procédé pour sa fabrication et ses applications**
Formmasse, enthaltend feuerfeste Fasern, verwendbar in der Herstellung ablativer Teile, Verfahren zu ihrer Herstellung und ihre Anwendungen
Moulding matter containing refractory fibres useful in the production of ablative parts, process for its manufacture and its applications

(30) Priorité: 05.12.1991 FR 9115078
(43) Date de publication de la demande: 09.06.1993
(73) Titulaire: AEROSPATIALE Société Nationale Industrielle, 75781 Paris Cédex 16 (FR)
(72) Inventeur: Ferrier, Christiane, F-91430 Igny (FR); Vernotte, Jean-Marie, F-92170 Vanves (FR); Romand, Christian, F-92320 Chatillon (FR)
(74) Mandataire: Lhuillier, René

(56) Documents cités:
- EP-A- 0 018 506
- EP-A- 0 267 289
- US-A- 4 507 165
- US-A- 4 581 391

## Description

L'invention a pour objet un nouveau type de matière à mouler pouvant être moulée par les moyens connus de l'homme du métier, notamment par injection, pour la fabrication de matériaux composites utilisables, entre autres, pour des missiles tactiques, un procédé pour sa fabrication et ses applications.

Les matériaux composites utilisables pour des moteurs de missiles tactiques doivent présenter des caractéristiques mécaniques et thermiques compatibles avec l'application envisagée, avec notamment la possibilité de contrôler leur ablation lors du fonctionnement du propulseur.

Les matériaux de ce type connus jusqu'à présent, à base de charges, notamment de charges fibreuses telles que le coton, le verre, le mica et de résines thermodurcissables telles que des résines phénoliques ou des polyesters, sont moulés par compression simple ou compression-transfert. Ces modes de fabrication présentent des inconvénients, notamment dans la mesure où ils nécessitent des cycles de moulage longs, incompatibles avec des fabrications en grande série. De plus, la répartition des charges, en particulier des fibres, est totalement aléatoire et il est donc impossible de contrôler l'ablation des matériaux en question lors de leur utilisation, notamment en propulseur.

L'invention a pour but de remédier aux inconvénients mentionnés ci-dessus en fournissant une matière à mouler pouvant être moulée par injection, pour la fabrication de matériaux composites utilisables notamment dans des moteurs de missiles tactiques, notamment des moteurs à poudre, avec possibilité d'assurer en fonctionnement une ablation ne générant pas de défauts profonds sur la surface concernée.

Ce but est atteint selon l'invention qui, selon l'un de ses aspects, fournit une matière à mouler thermodurcissable, contenant des fibres réfractaires, caractérisée en ce qu'elle peut être moulée par injection et se présente sous forme de "flock" essentiellement constitué de 60 à 30 % en poids de charges solides, imprégnées de 40 à 70 % en poids de résine thermodurcissable.

Par "flock" on entend ici un assemblage de fibrilles sous forme de bourre.

Les charges solides sont essentiellement constituées de fibres réfractaires telles que des fibres de carbone, de graphite, de carbure de silicium, de silice ou de résine aramide telle que celle commercialisée sous la dénomination Kevlar® par la Société Du Pont, les fibres de carbone et de carbure de silicium étant préférées.

Dans cette matière à mouler, les fibres présentent avantageusement des longueurs comprises entre quelques microns (µm) et quelques millimètres (mm), notamment des longueurs de 5 µm à 6 mm.

Il est toutefois avantageux qu'une partie des charges solides soit constituée d'une poudre choisie notamment parmi les noirs de carbone ou les graphites.

La présence de poudre dans les charges solides est particulièrement avantageuse, dans la mesure où, entre autres avantages, elle favorise l'écoulement du matériau dans la vis lors de l'injection.

La résine thermodurcissable de cette matière à mouler peut être choisie notamment parmi les résines donnant, lors de la pyrolyse, un fort taux de coke, telles que par exemple les polystyryl-pyridines (PSP), les résines polyimides et les résines phénoliques.

Toutefois, il semble que les résines de type phénolique, telles que celles connues sous la dénomination novolaque, soient particulièrement appropriées à la fabrication de la matière à mouler selon l'invention.

Selon un autre aspect, l'invention fournit un procédé de fabrication de la matière à mouler, sous forme de flock, définie ci-dessus.

Plus précisément, l'invention a également pour objet un procédé de fabrication de la matière à mouler thermodurcissable définie ci-dessus, caractérisé en ce qu'il comprend essentiellement les étapes consistant à :
1° préparer un sirop de résine thermodurcissable catalysée, ayant une viscosité permettant d'optimiser l'imprégnation des charges,
2° introduire les charges solides dans ce sirop, dans les proportions requises, en mélangeant de manière à réaliser une imprégnation homogène des charges,
3° malaxer le mélange jusqu'à obtention d'un flock et
4° sécher le flock obtenu sous pression réduite.

Le sirop de résine catalysée peut être fabriqué à la demande, c'est-à-dire au moment de la fabrication de la matière à mouler, ou préparé à l'avance et stocké en chambre froide avant utilisation, le délai de péremption de la matière à mouler prenant effet à compter de la date de mise en contact de la résine avec son catalyseur.

Le choix du catalyseur dépend de la résine utilisée. Ainsi, dans le cas d'une résine phénolique de type novolaque, on utilise notamment l'hexaméthylène-tétramine comme catalyseur.

Le choix du solvant dépend essentiellement du type de résine utilisé. Ainsi, dans le cas d'une résine phénolique de type novolaque, le solvant utilisé peut être avantageusement de l'alcool dénaturé à 95° ou de l'acétone.

La viscosité du sirop est réglée, au moyen du solvant, de manière à permettre une imprégnation optimale des fibres. A titre d'exemple, dans le cas de l'utilisation d'une résine phénolique de type novolaque et de charges constituées de graphite en poudre et de fibres de carbone, la viscosité du sirop est avantageusement réglée à une valeur comprise entre 500 et 700 MPa.s.

Au cours du malaxage, la longueur des fibres est amenée dans la gamme définie plus haut.

Le séchage du flock obtenu a lieu avantageusement sous une pression ne dépassant pas 2666 Pa (20 mm Hg) et à une température de l'ordre de 50°C, pendant une durée prolongée, de l'ordre de 36 heures.

La matière à mouler thermodurcissable ainsi obtenue, sous forme de flock, peut être conservée dans une chambre froide, en sac clos étanche. Comme il a été indiqué plus haut, son délai de péremption prend effet à compter de la date de mise en présence de la résine avec son catalyseur.

Cette matière à mouler thermodurcissable peut être utilisée pour fabriquer des matériaux composites utilisables notamment dans la fabrication de moteurs de missiles tactiques, en particulier des moteurs à poudre car l'ablation de ces matériaux suit une loi de fonction monotone, c'est-à-dire régulière sur l'ensemble de la surface ablatable, ce qui assure, en fonctionnement, une ablation ne générant pas de défauts profonds sur la surface concernée.

Cette matière peut être moulée par injection, et c'est là l'un de ses avantages essentiels par rapport aux matières de l'art antérieur utilisables dans les applications visées ci-dessus, mais elle peut également être moulée selon les techniques habituellement utilisées pour les matériaux thermodurcissables et en particulier par compression ou compression-transfert, lorsque cela s'avère préférable.

L'invention sera mieux comprise au moyen de la description ci-après donnée à titre d'exemple de réalisation nullement limitatif.

### Exemple :

Pour réaliser un flock de carbone, on broie très finement de la résine phénolique novolaque et son catalyseur l'hexaméthylène-tétramine. Après le broyage, on tamise le tout. Ensuite commence l'opération de préparation du sirop d'imprégnation pour laquelle les ingrédients suivants doivent être fournis dans les proportions fixées, à savoir, en parties pondérales (pp) :
- résine phénolique 100
- hexaméthylène-tétramine 10
- stéarate de calcium 2
- alcool dénaturé à 95° 66.

Après pesée de ces produits :
- On verse dans un mélangeur :
   * la résine phénolique
   * l'alcool dénaturé.
- On met en route le mélangeur et on mélange jusqu'à dissolution complète.
- On verse dans le mélangeur en respectant l'ordre suivant :
   * l'hexaméthyléne-tétramine
   * le stéarate de calcium.
- On mélange pendant 1 heure minimum.
- On ajuste la viscosité du sirop entre 500 MPa.s et 700 MPa.s.

Après élaboration du sirop d'imprégnation, commence l'opération proprement dite de fabrication du flock.

Les ingrédients suivants doivent être fournis dans les proportions fixées, à savoir en parties pondérales (pp) :
- sirop de résine 890
- graphite en poudre 100
- fibres de carbone de 6 mm 350.

Après pesée de ces produits :
- On verse dans un malaxeur
   * le sirop de résine phénolique
   * le graphite en poudre
- On mélange jusqu'à obtention d'un produit homogène.
- On introduit les fibres de carbone pour réaliser une imprégnation homogène.
- On malaxe durant 1 heure 30 minutes au minimum.
- On sèche le flock obtenu dans un caisson à vide :
   - Température T = 50°C
   - Pression P ≤ 2666 Pa (20 mm Hg)
   - Durée t ≈ 36 heures
- Stockage de la matière en sac clos étanche.

En injection, les paramètres de moulage de ce type de matériau sont :
- Température de la vis :75 à 80°C
- Température du moule : 170 à 180°C
- Temps de cuisson : 2 à 4 min
- Durée du cycle : 4 à 6 min
- Pression d'injection : 80 MPa (800 bars).

Les caractéristiques du produit moulé obtenu sont :

| | |
|---|---|
| Masse volumique | 1430 kg/m³ |
| Retrait linéaire* | 0,2 - 0,6 % |
| Résistance à la traction | 35 MPa |
| Allongement à la rupture | 0,3 % |
| Résistance à la flexion | 130 MPa |
| Coefficient de dilatation linéaire | 8.10⁻⁵/°C |
| Chaleur massique | 1130 J/kg.°C |
| Conductivité thermique | 0,7 W/m.°C |
| Module E | 15 GPa |

| | |
|---|---|
| * Cette valeur est donnée à titre indicatif : elle dépend du type et des conditions de moulage, de la forme de la pièce, de l'orientation des fibres, etc... Elle doit être déterminée pour chaque type de pièce, par comparaison des cotes du moule et de la pièce moulée. | |

Dans une application du type moteur à poudre, la répartition et la nature des charges de ce type de matériau, ainsi obtenu et moulé, offrent la possibilité de contrôler l'ablation dudit matériau durant le fonctionnement, ladite ablation étant régulière.

Parmi les applications potentielles, on peut citer, entre autres, la fabrication de tuyères ablatables. Avec une poudre ayant une température de 2600°K, l'ablation d'un col de tuyère fabriqué avec ledit matériau et ayant un diamètre nominal de 23,3 mm, est de 0,8 mm par seconde au diamètre.

## Revendications

1. Matière à mouler thermodurcissable, contenant des fibres réfractaires, caractérisée en ce qu'elle peut être moulée par injection et se présente sous forme de "flock" essentiellement constitué de 60 à 30 % en poids de charges solides, imprégnées de 40 à 70 % en poids de résine thermodurcissable.

2. Matière à mouler selon la revendication 1, caractérisée en ce que les charges solides sont essentiellement constituées de fibres réfractaires, choisies notamment parmi les fibres de carbone, de graphite, de carbure de silicium, de silice ou de résine aramide.

3. Matière à mouler selon la revendication 2, caractérisée en ce que les fibres réfractaires sont des fibres de carbone ou de carbure de silicium.

4. Matière à mouler selon l'une quelconque des revendications 1 à 3, caractérisée en ce que la longueur des fibres réfractaires est comprise entre quelques microns et quelques millimètres et est notamment de 5 µm à 6mm.

5. Matière à mouler selon l'une quelconque des revendications 1 à 4, caractérisée en ce qu'une partie des charges solides est constituée d'une poudre, notamment une poudre de noir de carbone ou de graphite.

6. Matière à mouler selon l'une quelconque des revendications 1 à 5, caractérisée en ce que la résine thermodurcissable est choisie parmi les résines donnant, lors de la pyrolyse, un fort taux de coke, notamment parmi les polystyryl-pyridines, les résines polyimides et les résines phénoliques.

7. Matière à mouler selon la revendication 6, caractérisée en ce que la résine phénolique est une résine novolaque.

8. Procédé de fabrication de la matière à mouler selon l'une quelconque des revendications 1 à 7, caractérisé en ce qu'il comprend essentiellement les étapes consistant à :
1° préparer un sirop de résine thermodurcissable catalysée, ayant une viscosité permettant d'optimiser l'imprégnation des charges ;
2° introduire les charges solides dans ce sirop, dans les proportions requises, en mélangeant de manière à réaliser une imprégnation homogène des charges ;
3° malaxer le mélange jusqu'à obtention d'un flock ; et
4° sécher le flock obtenu sous pression réduite.

9. Procédé selon la revendication 8, caractérisé en ce que le sirop de résine thermodurcissable est fabriqué au moment de la fabrication de la matière à mouler ou préparé à l'avance et stocké en chambre froide.

10. Procédé selon la revendication 8 ou 9, caractérisé en ce que la résine thermodurcissable est une résine phénolique de type novolaque et en ce qu'elle est catalysée par l'hexaméthylène-tétramine.

11. Procédé selon la revendication 10, caractérisé en ce que le solvant servant à la préparation du sirop de résine thermodurcissable est de l'alcool dénaturé à 95° ou de l'acétone.

12. Procédé selon la revendication 10 ou 11, caractérisé en ce que les charges sont constituées de graphite en poudre et de fibres de carbone et en ce que la viscosité du sirop est réglée à une valeur comprise entre 500 et 700 MPa.s.

13. Procédé selon l'une quelconque des revendications 8 à 12, caractérisé en ce que le malaxage est poursuivi pendant une durée suffisante pour amener la longueur des fibres réfractaires à la valeur désirée.

14. Procédé selon l'une quelconque des revendications 8 à 13, caractérisé en ce que le séchage est réalisé sous une pression ne dépassant pas 2666 Pa (20 mm Hg) et à une température d'environ 50°C, pendant une durée d'environ 36 heures.

15. Utilisation de la matière à mouler selon l'une quelconque des revendications 1 à 7, ou telle qu'obtenue par mise en oeuvre du procédé selon l'une quelconque des revendications 8 à 14, pour fabriquer des matériaux composites utilisables notamment dans la fabrication de moteurs de missiles tactiques, en particulier des moteurs à poudre et tout particulièrement dans la fabrication de tuyères ablatables.

16. Utilisation selon la revendication 15, caractérisée en ce qu'elle est mise en oeuvre par injection.

## Patentansprüche

1. Wärmeaushärtende Formmasse mit hitzebeständigen Fasern, dadurch gekennzeichnet, daß sie spritzgegossen werden kann und in Form von Flockfasern vorliegt, die sich im wesentlichen aus 60 bis 30 Gew.-% festen mit 40 bis 70 Gew.-% wärmeaushärtendem Harz imprägnierten Füllstoffen zusammensetzen.

2. Formmasse nach Anspruch 1, dadurch gekennzeichnet, daß sich die festen Füllstoffe im wesentlichen aus hitzebeständigen Fasern zusammensetzen, ausgewählt vor allem unter Fasern aus Kohle, aus Graphit, aus Siliciumcarbid, Kieselerde oder einem Aramidharz.

3. Formmasse nach Anspruch 2, dadurch gekennzeichnet, daß die hitzebeständigen Fasern Kohlefasern oder Siliciumcarbidfasern sind.

4. Formmasse nach einem der Ansprüche 1 bis 3, dadurch gekennzeichnet, daß die Länge der hitzebeständigen Fasern zwischen einigen Mikrons und einigen Millimetern, insbesondere im Bereich von 5 µm bis 6 mm liegt.

5. Formmasse nach einem der Ansprüche 1 bis 4, dadurch gekennzeichnet, daß sich ein Teil der festen Füllstoffe aus einem Pulver zusammensetzt, insbesondere aus einem Pulver aus Ruß oder Graphit.

6. Formmasse nach einem der Ansprüche 1 bis 5, dadurch gekennzeichnet, daß das wärmeaushärtende Harz ausgesucht ist unter den Harzen, welche bei Pyrolyse einen hohen Anteil an Koks liefern, insbvesondere unter den Polystyrylpyridinen, den Polyimidharzen und den Phenolharzen.

7. Formmasse nach Anspruch 6, dadurch gekennzeichnet, daß das Phenolharz ein Novolak ist.

8. Verfahren zur Herstellung einer Formmasse nach einem der Ansprüche 1 bis 7, dadurch gekennzeichnet, daß es im wesentlichen die Schritte umfaßt:
a) Zubereitung eines Sirups aus katalysiertem wärmeaushärtendem Harz mit einer zur Optimierung der Füllstoffimprägnierung geeigneten Viskosität;
b) Eintragen der festen Füllstoffe in den Sirup in den erforderlichen Anteilen, indem so gemischt wird, daß eine homogene Imprägnierung der Füllstoffe erreicht wird;
c) Durchkneten der Mischung bis zum Erhalt von Flockfasern; und
d) Trocknen der Flockfasern unter vermindertem Druck.

9. Verfahren nach Anspruch 8, dadurch gekennzeichnet, daß der Sirup aus wärmeaushärtendem Harz zum Zeitpunkt der Herstellung der Formmasse hergestellt oder vorher hergestellt und in einem kalten Raum aufbewahrt wird.

10. Verfahren nach Anspruch 8 oder 9, dadurch gekennzeichnet, daß das wärmeaushärtende Harz ein Phenolharz vom Novolak-Typ ist und dadurch, daß es mit Hexamethylentetramin katalysiert wird.

11. Verfahren nach Anspruch 10, dadurch gekennzeichnet, daß das für die Zubereitung des aus wärmeaushärtendem Harz bestehenden Sirups dienende Lösungsmittel auf 95° vergällter Alkohol oder Aceton ist.

12. Verfahren nach Anspruch 10 oder 11, dadurch gekennzeichnet, daß sich die Füllstoffe aus pulverförmigem Graphit und Kohlefasern zusammensetzen und dadurch, daß die Viskosität des Sirups auf einen Wert zwischen 500 und 700 MPa·s eingestellt wird.

13. Verfahren nach einem der Ansprüche 8 bis 12, dadurch gekennzeichnet, daß das Durchkneten während einer Zeitspanne erfolgt, die ausreicht, um die Länge der hitzebeständigen Fasern auf den gewünschten Wert zu bringen.

14. Verfahren nach einem der Ansprüche 8 bis 13, dadurch gekennzeichnet, daß das Trocknen unter einem Druck erfolgt, der 2666 Pa (20 mm Hg) nicht übersteigt und bei einer Temperatur von ca. 50°C über einen Zeitraum von ungefähr 36 Stunden.

15. Verwendung der Formmasse nach einem der Ansprüche 1 bis 7 oder wie sie nach Durchführung des Verfahrens nach einem der Ansprüche 8 bis 14 erhalten wurde zur Herstellung von Kompositwerkstoffen, welche insbesondere bei der Herstellung von Motoren für taktische Flugkörper verwendet werden können, besonders für Motoren mit Pulverantrieb und ganz besonders für die Herstellung von Ablationsdüsen.

16. Verwendung nach Anspruch 15, dadurch gekennzeichnet daß sie in einem Spritzvorgang erfolgt.

## Claims

1. Thermosetting molding material, containing refractory fibers, characterized in that it can be injection molded and takes the form of a "flock" essentially constituted by 60 to 30 % by weight of solid fillers, impregnated with 40 to 70 % by weight of thermosetting resin.

2. Molding material according to claim 1, characterized in that the solid fillers are essentially constituted by refractory fibers, chosen, in particular, from among carbon, graphite, silicon carbide, silica or aramide resin fibers.

3. Molding material according to claim 2, characterized in that the refractory fibers are carbon or silicon carbide fibers.

4. Molding material according to any one of claims 1 to 3, caracterized in that the length of the refractory fibers is between a few microns and a few millimeters and is, in particular, between 5 µm and 6 mm.

5. Molding material according to any one of claims 1 to 4, characterized in that a part of the solid fillers is constituted by a powder, in particular a carbon black or graphite powder.

6. Molding material according to any one of claims 1 to 5, characterized in that the thermosetting resin is chosen from among the resins yielding, upon pyrolysis, a high proportion of coke, particularly from among the polystyryl-pyridines, the polyimide resins and the phenolic resins.

7. Molding material according to claim 6, characterized in that the phenolic resin is a novolak resin.

8. Process for manufacturing the molding material according to any one of claims 1 to 7, characterized in that it essentially comprises the steps consisting in :
1° preparing a syrup of catalyzed thermosetting resin, having a viscosity enabling the impregnation of the fillers to be optimized ;
2° introducing the solid fillers into this syrup, in the requisite proportions, while mixing to ensure that the fillers are homogeneously impregnated ;
3° kneading the mixture until a flock is obtained ; and
4° drying the flock obtained under reduced pressure.

9. Process according to claim 8, characterized in that the syrup of thermosetting resin is manufactured at the time of manufacturing the molding material or prepared in advance and stored in a cold room.

10. Process according to claim 8 or 9, characterized in that the thermosetting resin is a novolak type phenolic resin and in that it is catalyzed by hexamethylene-tetramine.

11. Process according to claim 10, characterized in that the solvent used for preparing the syrup of thermosetting resin is 95° denatured alcohol, or acetone.

12. Process according to claim 10 or 11, characterized in that the fillers are constituted by graphite in powder form and carbon fibers and in that the viscosity of the syrup is adjusted to a value of between 500 and 700 MPa.s.

13. Process according to any one of claims 8 to 12, characterized in that kneading is continued for a duration sufficient to adjust the length of the refactory fibers to the desired value.

14. Process according to any one of claims 8 to 13, characterized in that drying is carried out at a pressure not exceeding 2666 Pa (20 mm Hg) and at a temperature of approximately 50°C, for a duration of approximately 36 hours.

15. Use of the molding material according to any one of claims 1 to 7, or as obtained by implementing the process according to any one of claims 8 to 14, to manufacture composite materials that can be used, in particular, in the manufacture of motors for tactical missiles, in particular powder propelled motors, and most particularly in the manufacture of ablatable blast pipes.

16. Use according to claim 15, characterized in that it is implemented by injection molding.
